# EUROPEAN PATENT SPECIFICATION

(11) **EP 2 448 206 B1**
(45) Date of publication and mention of the grant of the patent: **28.04.2021**
(21) Application number: 10791403.8
(22) Date of filing: 27.05.2010
(51) Int. Cl.: H04L 29/08, H04N 21/258, H04N 21/63, H04N 21/647, H04N 21/4788

(54) **METHOD, SYSTEM AND DEVICE FOR TRANSMITTING VIDEO DATA**
VERFAHREN, SYSTEM UND VORRICHTUNG ZUR ÜBERTRAGUNG VON VIDEODATEN
PROCÉDÉ, SYSTÈME ET DISPOSITIF DE TRANSMISSION DE DONNÉES VIDÉO

(30) Priority: 23.06.2009 CN 200910150593
(43) Date of publication of application: 02.05.2012
(73) Proprietor: Tencent Technology (Shenzhen) Company Limited, Shenzhen Guangdong 518044 (CN)
(72) Inventor: DANG, Jianguo, Guangdong 518044 (CN); DONG, Bingjun, Guangdong 518044 (CN); YANG, Min, Guangdong 518044 (CN)
(74) Representative: Körber, Martin Hans
(86) International application number: PCT/CN2010/073304
(87) International publication number: WO 2010/148897

(56) References cited:
- WO-A1-2008/051974
- CN-A- 1 713 177
- CN-A- 1 897 588
- CN-A- 101 594 242
- JP-A- 2008 193 221
- FORD M I T P SRISURESH CAYMAS SYSTEMS D KEGEL KEGEL COM B: "Peer-to-Peer(P2P) communication across Network Address Translators(NAT); draft-ford-midcom-p2p-02.txt", PEER-TO-PEER(P2P) COMMUNICATION ACROSS NETWORK ADDRESS TRANSLATORS(NAT); DRAFT-FORD-MIDCOM-P2P-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 1 March 2004 (2004-03-01), XP015013270,
- ROSENBERG CISCO SYSTEMS R MAHY AIRSPACE C HUITEMA MICROSOFT J: "Traversal Using Relay NAT (TURN); draft-rosenberg-midcom-turn-08.txt", TRAVERSAL USING RELAY NAT (TURN); DRAFT-ROSENBERG-MIDCOM-TURN-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 8, 9 September 2005 (2005-09-09), XP015040197,

## Description

### Field of the Technology

The invention relates to network communications technologies, and more particularly, to a method, system and device for transmitting video data.

### Background of the Invention

With the development of network communications technologies, video data has become one kind of important resources of current network communication field. Due to the characteristics of the video data, such as visibility, reality, the video data has been widely used by users, particularly at the aspects of network games, Instant Messaging (IM), etc.

Files of video data are generally very big, which occupy relatively large bandwidth during the network transmission. Thus, how to implement fast transmission in the network, to enable users to obtain the video data quickly, has become a primary problem needing to be solved during the transmission of the video data.

At present, a relay server may be adopted in the network. The video data between users may be transferred with the server, to achieve the transmission of video data between users.

Peer to Peer (P2P) technologies may also be adopted, during the transmission of video data in a network. A user may be enabled to directly connect to a computer of another user with the P2P technologies, instead of being connected with a server to browse and download. Thus, the video data may be shared and interacted more directly. The differences between the P2P technologies and the traditional client/server mode are that, the P2P doesn't have a central server, or only has a powerless central server. Thus, user's storage space, Central Processing Unit (CPU) and bandwidth resources may be fully utilized. Operational and maintenance costs may be lower.

When implementing the technical solution of the invention, at least the following disadvantages and deficiencies in the prior art are found by the inventor, after analyzing and researching.

With server relay technologies to transmit video data, since the large number of users and transmitted data, a large bandwidth is needed, which results in a high bandwidth cost. With P2P technologies to transmit video data, since the low processing capabilities of P2P client devices, scarce bandwidth resources and differences among Internet Service Providers (ISPs), problems, such as low speed of log-on and connecting, or even without connection, may generate. Thus, users' usage experience may be reduced.

WO 2008/051974 A1 discloses a system and a method for establishing a Peer-To-Peer connection.

### Summary of the Invention

In view of above, it is necessary to provide a method for transmitting video data.

In addition, a system for transmitting video data is also provided.

In addition, a device for transmitting video data is also provided.

A method for transmitting video data, including:
sending, by a first game client, a first log-on and connection establish request respectively to a relay server and a Peer to Peer, P2P, server, wherein the relay server and the P2P server are provided by a video network game system ;
sending, by a second game client, a second log-on and connection establish request respectively to the relay server and the P2P server;
forwarding and transmitting the video data, by the first game client and the second game client via the relay server, when a first relay connection between the first game client and the relay server is established successfully and a second relay connection between the second game client and the relay server is established successfully;
suspending, by the first game client and the second game client, the forwarding and transmitting of the video data via the relay server, when a first P2P connection between the first game client and the P2P sever is established successfully and a second P2P connection between the second game client and the P2P server is established successfully, after transmission of a first frame of data between the first game client and the second game client is completed with a P2P mode;
transmitting, by the first game client and the second game client, directly the video data with the P2P mode;
during the process of transmitting the video data by the first game client and the second game client with the P2P mode, when packet loss of the video data transmitted between the first game client and the second game client is larger than a predetermined coefficient, continuously transmitting, by the first game client and the second game client, the video data via the relay server; and sending, by the first game client, the first log-on and connection establish request to the P2P server; sending, by the second game client, the second log-on and connection establish request to the P2P server;
when the P2P server restores, respectively receiving, by the first game client and the second game client, a P2P connection success response sent by the P2P server, suspending transmitting of the video data via the relay server, and transmitting the video data with the P2P mode.

A system for transmitting video data, in which the system includes a first game client, a second game client, a relay server and a Peer to Peer, P2P, server, the relay server and the P2P server are provided by a video network game system, wherein
the first game client is configured to send a first log-on and connection establish request to the relay server and the P2P server, establish a first relay connection with the relay server, forward and transmit the video data to the second game client via the relay server, establish a first P2P connection with the P2P server, suspend forwarding and transmitting of the video data to the second game client via the relay server, and transmit directly the video data to the second game client with a P2P mode;
the second game client is configured to send a second log-on and connection establish request to the relay server and the P2P server, establish a second relay connection with the relay server, forward and transmit the video data to the first game client via the relay server, establish a second P2P connection with the P2P server, suspend the forwarding and transmitting of the video data to the first game client via the relay server, and transmit directly the video data to the first game client with the P2P mode;
the relay server is configured to receive the first and second log-on and connection establish requests respectively from the first game client and the second game client, establish the first and second relay connections respectively with the first game client and the second game client, forward and transmit the video data for the first game client and the second game client;
the P2P server is configured to receive the first and second log-on and connection establish requests respectively from the first game client and the second game client, establish the first and second P2P connections respectively with the first game client and the second game client; when the first game client and the second game client suspend the forwarding and transmitting of the video data via the relay server, the P2P server is further configured to provide the P2P mode for the first game client and the second game client to transmit directly the video data;
during a process of transmitting the video data by the first game client and the second game client with the P2P mode, when packet loss of the video data transmitted between the first game client and the second game client is larger than a predetermined coefficient, the first game client and the second game client are further configured to continuously transmit the video data via the relay server, the P2P server is further configured to receive the first and second log-on and connection establish requests respectively from the first game client and the second game client;
when the P2P server restores, the P2P server is configured to respectively send a P2P connection success response to the first game client and the second game client, so that the first game client and the second game client suspend
transmitting of the video data via the relay server, and transmit the video data with the P2P mode.

A device for transmitting video data, in which the device is set in a first game client, the device comprises:
a sending module, configured to send a first log-on and connection establish request respectively to a relay server and a Peer to Peer, P2P, server, wherein the relay server and the P2P server are provided by a video network game system;
a relay transmitting module, configured to forward and transmit the video data with a second game client via the relay server, when the first relay connection between the first game client and the relay server is established successfully, and a second relay connection between the second game client and the relay server is established successfully;
a relay suspending module, configured to suspend the forwarding and transmitting of the video data via the relay server, when a first P2P connection between the first game client and the P2P sever is established successfully and a second P2P connection between the second game client and the P2P server is established successfully, after transmission of a first frame of data between the first game client and the second game client is completed with a P2P mode;
a P2P transmitting module, configured to transmit directly the video data with the P2P mode;
during the process of transmitting the video data by the first game client and the second game client with the P2P mode, when packet loss of the video data transmitted between the first game client and the second game client is larger than a predetermined coefficient, the relay transmitting module is further configured to continuously transmit the video data via the relay server; and the sending module is further configured to send the first log-on and connection establish request to the P2P server;
the relay suspending module is further configured to, after the P2P server restores, and the device receives a P2P connection success response sent by the P2P server, suspend transmitting of the video data via the relay server, and the P2P transmitting module is further configured to transmit the video data with the P2P mode.

In the technical solution provided by embodiments of the invention, at the initial stage of transmitting the video data, problems about low speed of log-on and connection of users may be solved, by using server transferring technologies to transmit the video data. Subsequently, users may be enabled to transmit video quickly. Usage experience of users may be improved. When the P2P connection is successful, network bandwidth may be saved by using the P2P to transmit the video data.

### Brief Description of the Drawings

FIG.1 is a schematic diagram illustrating flow of a method in accordance with the first embodiment of the invention.
FIG.2 is a schematic diagram illustrating flow of a method in accordance with the second embodiment of the invention.
FIG.3 is a schematic diagram illustrating structure of a system in accordance with the third embodiment of the invention.
FIG.4 is a schematic diagram illustrating structure of a device in accordance with the fourth embodiment of the invention.

### Embodiments of the Invention

To make objectives, technical solutions and advantages of the invention more clear, detailed descriptions about implementation modes of the invention are further provided in the following, accompanying with attached figures.

In the technical solution provided by embodiments of the invention, during the initial stage for transmitting the video data, a relay server is adopted to transmit the video data. When the P2P connection is successful, the P2P mode is adopted to directly transmit the video data. Thus, user problems, such as low speed of log-on and connection, may be solved. A user may be enabled to transmit video quickly. User's usage experience may be improved. Network bandwidth may also be saved. When there is something wrong with the P2P and the P2P cannot be used, it may switch to the relay server timely. With the relay server to transmit video data, the user may be enabled to transmit the video data continuously, to ensure the continuity for the user to transmit the video data.

### The first embodiment

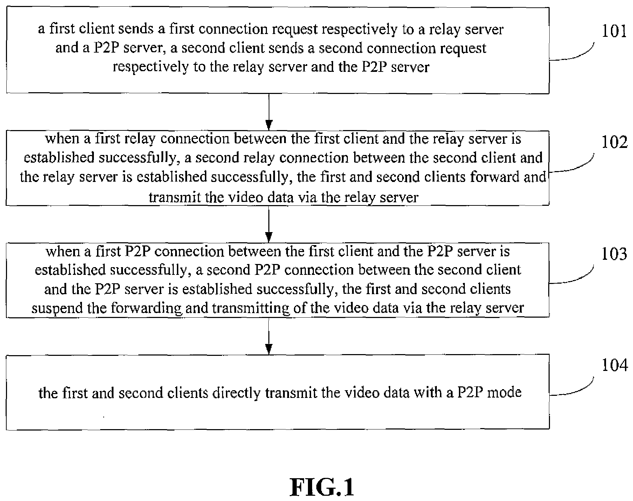

To solve problems, such as low speed of log-on and connection, even without connection, generated when a user client adopts the P2P mode, so as to improve user's usage experience and to save network bandwidth, an embodiment of the invention provides a method for transmitting video data. With reference to FIG.1, the method includes the follows.

101: A first client sends a first connection request respectively to a relay server and a P2P server. A second client sends a second connection request respectively to the relay server and the P2P server.

Specifically speaking, the first and second clients may be game clients, webpage clients, mobile terminal clients, and so on, which are not limited in the embodiment of the invention.

102: When the first relay connection between the first client and the relay server is established successful, the second relay connection between the second client and the relay server is established successful, the relay server is adopted by the first and second clients to forward and transmit the video data.

103: When the first P2P connection between the first client and the P2P server is established successfully, the second P2P connection between the second client and the P2P server is established successfully, the first and second clients suspend forwarding and transmitting of the video data via the relay server.

104: The first and second clients use the P2P mode to directly transmit the video data.

When the first P2P connection between the first client and the P2P server is established successfully, the second P2P connection between the second client and the P2P server is established successfully, the first and second clients suspend forwarding and transmitting of the video data via the relay server, which includes the follows.

When the first P2P connection between the first client and the P2P server is established successfully, the second P2P connection between the second client and the P2P server is established successfully, after transmitting the first frame of data with the P2P mode, the first and second clients suspend forwarding and transmitting of the video data via the relay server.

After directly transmitting the video data by the first and second clients with the P2P mode, the method also includes the follows.

During the process of transmitting the video data with the P2P mode by the first and second clients, if the connection between the first and second clients breaks, or, packet loss of video data transmitted by the first and second clients is larger than a predetermines coefficient, still or, buffer time of video data transmitted by the first and second clients is larger than a predetermined time, the first client will determine whether to maintain the first relay connection to the relay server, the second client will determine whether to maintain the second relay connection to the relay server.

The predetermined coefficient of packet loss and predetermined time of buffer time may be flexibly selected according to actual situation, e.g., the predetermined coefficient of packet loss may be set as 10%, and the predetermined time of buffer time may be set as 10 seconds, which are not limited in the embodiments of the invention.

When the first relay connection between the first client and the relay server is maintained, the second relay connection between the second client and the relay server is maintained, the video data is continuously transmitted via the relay server.

When the first relay connection between the first client and the relay server breaks, the second relay connection between the second client and the relay server is established successfully, the first client sends the first connection request to the relay server. When the first connection between the first client and the relay server is established successfully, the first and second clients forward and transmit the video data via the relay server.

When the second relay connection between the second client and the relay server breaks, the first relay connection between the first client and the relay server is established successfully, the second client sends the second connection request to the relay server. When the second relay connection between the second client and the relay server is established successfully, the second and first clients forward and transmit the video data via the relay server.

When the first relay connection between the first client and the relay server breaks, the second relay connection between the second client and the relay server breaks, the first client sends the first connection request to the relay server. The second client sends the second connection request to the relay server.

When the first relay connection between the first client and the relay server is established successfully, the second relay connection between the second client and the relay server is established successfully, the first and second clients forward and transmit the video data via the relay server.

The method further includes the follows.

Before the first and second relay connections are established successfully, in which the first relay connection is established between the first client and the relay server, the second relay connection is established between the second client and the relay server, the first P2P connection between the first client and the P2P server has already been established successfully, the second P2P connection between the second client and the P2P server has also been established successfully. Then the first and second clients may directly transmit the video data with the P2P mode. The first and second clients may respectively break the connection to the relay server.

Before the first and second relay connections are established successfully, in which the first relay connection is established between the first client and the relay server, the second relay connection is established between the second client and the relay server, the method further includes the follows.

The relay server receives the first and second connection requests respectively sent by the first and second clients.

The relay server authenticates the first and second users, respectively based on the identification (ID) authentication information of the first user in the first connection request, and the ID authentication information of the second user in the second connection request.

When authentications for the first and second users are successful, the relay server establishes the first and second relay connections respectively with the first and second clients, respectively sends a first relay connection success response and a second relay connection success response to the first and second clients.

Before the first and second P2P connections are established successfully, in which the first P2P connection is established between the first client and the P2P server, the second P2P connection is established between the second client and the P2P server, the method further includes the follows.

The P2P server receives the first and second connection requests, which are respectively sent by the first and second clients.

The P2P server authenticates the first and second users, respectively based on the ID authentication information of the first user in the first connection request, and based on the ID authentication information of the second user in the second connection request.

When the authentications performed by the P2P server for the first and second users are successful, the P2P server respectively establishes first and second P2P connections with the first and second clients, and respectively sends first and second P2P connection success responses to the first and second clients.

With the method provided by an embodiment of the invention, at the initial stage for transmitting video data, a relay server is adopted to transmit the video data. When the P2P connection is successful, the video data may be directly transmitted with the P2P mode. Thus, problems about low speed of log-on and connection of users may be solved. Subsequently, users may be enabled to transmit video quickly. Usage experience of users may be improved. And network bandwidth may be saved. When the P2P cannot be used because of something wrong, it may switch to the relay server timely. Subsequently, the video data may be transmitted with the relay server, to enable users to transmit the video data continuously, to ensure the continuity for users to transmit the video data.

### The second embodiment

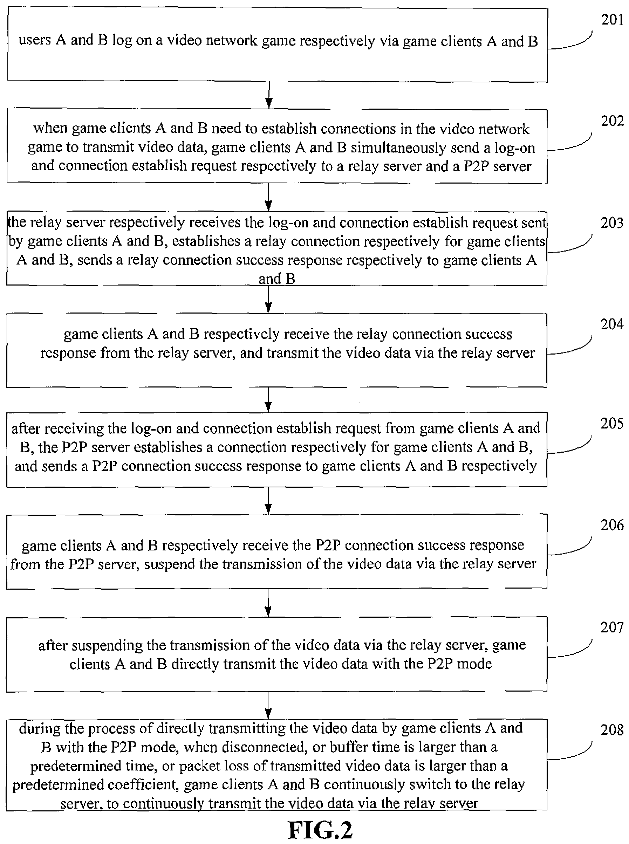

To solve problems generated when a user client adopts the P2P mode, such as low speed of log-on and connection, even without connection, so as to improve usage experience of the user, and to save network bandwidth, an embodiment of the invention provides a method for transmitting video data. The embodiment of the invention is explained with an example, in which users A and B transmit video data in a video network game. With reference to FIG.2, the specific implementation process is as follows.

201: Users A and B log on a video network game respectively with game clients A and B.

A user logs on the game system of the video network game with an account and password at the game client. When logging on the game system of the video network game successfully, the user may interact with the game server about game data via the game client, to implement game functions.

The account and password of a user may be taken as identity of the user, which is unique in the game system. A user may obtain the account and password after registering on a video network game interface or other interfaces. Before logging on the game system with respective game clients by users A and B, users A and B need to register respective account and password on the interface of the game system or other interfaces.

202: When needing to establish connections to transmit video data in the video network game, game clients A and B respectively send a log-on and connection establish request to the relay server and the P2P server simultaneously.

When game clients A and B need to establish a connection in the video network game to transmit video data interactively, firstly, game client A simultaneously sends a log-on and connection establish request to the relay server and the P2P server. Game client B respectively sends a log-on and connection establish request to the relay server and the P2P server simultaneously.

The log-on and connection establish request is sent by the game client to the relay server and the P2P server simultaneously. In addition, in practical applications, log-on and connection speed to the relay server is generally higher than that to the P2P server. Thus, the log-on and connection establish request may be firstly sent to the relay server, to enable a user to connect and transmit the video data as quickly as possible. And then, the log-on and connection establish request may be sent to the P2P server. The relay server is provided by the video network game system for transmitting video data resources, which is a server dedicated for relaying video data among users. The P2P server is provided by the video network game system, which is a server used for directly transmitting video data among users.

203: The relay server receives the log-on and connection establish request respectively sent by game clients A and B, respectively establishes a relay connection for game clients A and B, and respectively sends a relay connection success response to game clients A and B.

ID authentication information for identifying a user may be carried in the log-on and connection establish request sent by the game client to the relay server. The ID authentication information here may be account and password registered by the user in the game system, or may be encrypted ID obtained after transforming the account and password registered by the user in the game system. A game client logs on the relay server with the ID. The relay server stores a public key in advance, so as to authenticate a user with the public key stored in itself and the ID authentication information sent by the game client.

After receiving the log-on and connection establish request sent by game clients A and B, the relay server obtains the ID authentication information carried in the log-on and connection establish request sent by game client A, performs the authentication with the public key stored in the relay server in advance. When the authentication is successful, the relay server establishes a relay connection with game client A. Correspondingly, with similar processing operations, the relay server establishes a relay connection with game client B.

After establishing connections with game clients A and B respectively, the relay server respectively sends a relay connection success response to game clients A and B.

204: Game clients A and B respectively receives the relay connection success response sent by the relay sever, and transmit the video data via the relay server.

Game client A sends video data thereof to game client B via the relay server, and receives video data sent by game client B via the relay server. Correspondingly, game client B sends video data thereof to game client A via the relay server, and receives the video data sent by game client A via the relay server.

On one hand, game client of a user is responsible for collecting and encoding local video to obtain local video data, and sending the local video data to the relay server, to enable the relay server to be in charge of transmitting the local video data to the peer end user. On the other hand, the game client of the user is also responsible for receiving the video data from the peer end user, decoding the received video data to display for the user. Both of game clients A and B in the embodiment of the invention possess functions of above two aspects.

Time for game clients A and B establishing connections with the relay server may be not totally the same with each other. There may be some time difference. After the connection between game client A and the relay server is established successfully, the connection between game client B and the relay server is established successfully, the video data may be transmitted via the relay server.

205: After receiving the log-on and connection establish requests sent by game clients A and B, the P2P server respectively establishes a connection with game clients A and B, and respectively sends a P2P connection success response to game clients A and B.

ID authentication information for identifying a user may be carried in the log-on and connection establish request, which is sent by a game client to a P2P server. The ID authentication information here may be account and password registered by the user in the game system, or may be encrypted ID obtained after transforming the account and password registered by the user in the game system. A game client may log on the P2P server with the ID. The P2P server may store a public key in advance, so as to authenticate the user with the public key stored in the P2P server and the ID authentication information sent by the user's game client.

After receiving the log-on and connection establish request sent by game clients A and B, the P2P server obtains the ID authentication information carried in the log-on and connection establish request sent by game client A, to perform the authentication with the public key stored in the P2P server in advance. When the authentication is successful, the P2P server establishes a connection with game client A. Correspondingly, with similar processing operations, the P2P server establishes a connection with game client B.

After establishing a connection with game clients A and B respectively, the P2P server respectively sends a relay connection success response to game clients A and B.

The P2P server directly transmits the video data resources among game clients. Each game client is not only a server, but also a client. Thus, regarding the relay server, capabilities of the game client, such as processing capabilities, running speed and bandwidth resources, are worse. Therefore, speed of log-on and connection to the P2P server is generally slow, which is lower than that to the relay server. Therefore, before establishing by the P2P server a connection with a user's game client, the user's game client probably has already established a connection with the relay server, and has transmitted the video data.

206: Game clients A and B respectively receive a P2P connection success response sent by the P2P server, suspend transmitting of the video data via the relay server.

After respectively receiving the P2P connection success response from the P2P server, game clients A and B respectively suspend the connection to the relay server, and suspend transmission of the vide data via the relay server. In addition, game clients A and B may also directly break the respective connection to the relay server.

207: After suspending transmission of the video data via the relay server, game clients A and B directly transmit the video data with the P2P mode.

Game client A directly sends the video data thereof to game client B with the P2P mode, and directly receives the video data sent by game client B with the P2P mode. Correspondingly, game client B directly sends the video data thereof to game client A with the P2P mode, and directly receives the video data sent by game client A with the P2P mode.

On one hand, game client of a user is responsible for collecting and encoding local video to obtain local video data, sending the local video data to the peer end user with the P2P mode. On the other hand, game client of a user is also responsible for receiving the video data from the peer end user with the P2P mode, decoding the received video data to display for the user.

Time for establishing a connection respectively by game clients A and B to the P2P server may not be totally the same with each other. There may be a certain time difference. Only when a connection to the P2P server respectively established by game clients A and B is successful, that is, game clients A and B respectively receive the connection success response sent by the P2P server, and respectively suspend transmission of video data to the relay server. Subsequently, game clients A and B may directly transmit the video data with the P2P mode.

208: During the process of directly transmitting the video data between game clients A and B with the P2P mode, when disconnected, or buffer time is larger than a predetermined time, or packet loss of video data transmitted is larger than a predetermined coefficient, game clients A and B may switch to the relay server continuously, so as to transmit the video data continuously via the relay server.

During the process of directly transmitting the video data between game clients A and B with the P2P mode, when game client A cannot connect to game client B, or connection buffer time is larger than a predetermined time, which leads to in-continuity video transmission, still or, packet loss of the video data transmitted is larger than a predetermined coefficient, the video data cannot be transmitted continuously with the P2P mode. At this time, game clients A and B may enable the relay server again, so as to continuously transmit the video data via the relay server. Thus, continuity of transmission of the user's video data may be maintained, and the user's usage experience may be improved.

The predetermined coefficient of packet loss and predetermined time of buffer time may be flexibly selected according to actual conditions. For example, the predetermined coefficient of packet loss may be set as 10%, the predetermined time of buffer time may be set as 10 seconds, which are not limited in the embodiments of the invention.

In block 206, when the first relay connection between game client and the relay server is only suspended instead of being broken, it only needs to release the suspension at this time, to maintain the connection continuously, that is, the relay server may be continuously used to transmit the video data. In block 206, when the relay connection between the game client and the relay server is broken, the game client needs to send a log-on and connection establish request to the relay server again. When passing the authentication, the relay server establishes a relay connection with the game client again. After the relay server sends a relay connection success response to the game client, the video data among game clients may be continuously forwarded via the relay server. That is, blocks 202-204 are executed once again.

In addition, when there is something wrong with the P2P server, a game client uses the relay server to transmit the video data. At this time, the game client may still send the log-on and connection establish request to the P2P server. When the P2P server restores, blocks 205-207 may be executed. The game client may switch to the P2P mode, to adopt the P2P mode to transmit the video data.

Above blocks 201-207 specifically disclose that, a game client relays and transmits video data via a relay server in a video network game, at the initial stage of transmission. After the P2P connection is successful, the P2P mode is adopted to directly transmit the video data. Thus, problems, such as low speed of log-on and connection, even without connection, which are generated when a game client adopts the P2P mode, may be solved, so as to improve a user's usage experience and to save network bandwidth. Meanwhile, when the P2P cannot be used because of something wrong, it may switch to the relay server in time, so as to transmit the video data via the relay server, to enable the game client to continuously transmit the video data. Thus, the continuity of user video may be ensured.

Besides, in above blocks, in block 202, after game clients A and B respectively sending a log-on and connection establish request to the relay server and the P2P server simultaneously, the P2P server firstly completes the connection with the game client. That is, before receiving the relay connection success response from the relay server, game clients A and B have already received the P2P connection success response from the P2P server. Subsequently, game clients A and B directly adopt the P2P mode to transmit the video data. It is not necessary to establish a connection with the relay server. The connection process between game clients and the relay server may be directly suspended.

However, when the P2P cannot be used because of something wrong, the game client needs to establish a connection with the relay server again, to ensure transmission of video data via the relay server.

Besides, after a connection between a game client and the relay server is established, supposing the game client cannot establish a connection with the P2P server all the time, or establishment of the connection between the game client and the P2P server cannot be finished all the time, the game client adopts the relay server to transmit the video data all the time.

In the embodiment of the invention, an example is given, in which games clients A and B transmit video data in a video network game. One game client therein may simultaneously transmit the video data with multiple game clients. The one game client may respectively establish a connection and transmit data to each game client of the multiple game clients via the relay server, at the initial stage of the transmission. When the P2P connection is successful, the one game client may directly transmit the video data with the P2P mode. The processing flow is similar, which is not repeated here.

In the embodiment of the invention, an example is given, in which a user transmits video data in a video network game. The method provided by the embodiment of the invention is also applicable to any other scenes needing to transmit video data, e.g., Instant Messaging (IM), online chat, etc. The processing blocks are similar, which are not repeated here.

In accordance with the method provided by the embodiment of the invention, the video data may be forwarded and transmitted by a game client of a user in a video network game via the relay server, at the initial stage of transmission. When the P2P connection is successful, the video data may be directly transmitted with the P2P mode. Thus, problems, such as low speed of log-on and connection, even without connection, generated when a user client adopts the P2P mode, may be solved, so as to improve usage experience of the user and save network bandwidth. Meanwhile, when the P2P cannot be used because of something wrong, it may switch to the relay server in time, to transmit the video data via the relay server. Thus, the user may be enabled to continuously transmit the video data, to ensure the continuity of the user's video.

### The third embodiment

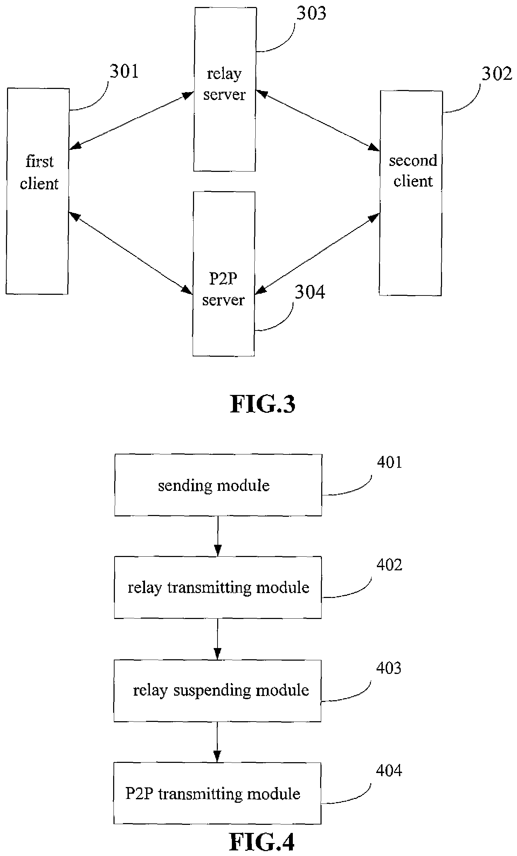

An embodiment of the invention provides a system for transmitting video data. With reference to FIG.3, the system includes a first client 301, a second client 302, a relay server 303 and a P2P server 304.

The first client 301 is configured to send a first connection request to the relay server 303 and the P2P server 304, establish a first relay connection with the relay server 303, forward and transmit the video data to the second client 302 via the relay server 303, establish a first P2P connection with the P2P server 304, suspend forwarding and transmitting of the video data to the second client 302 via the relay server 303, and directly transmit the video data to the second client 302 with the P2P mode.

The second client 302 is configured to send a second connection request to the relay server 303 and the P2P server 304, establish a second relay connection with the relay server 303, forward and transmit the video data to the first client 301 via the relay server 303, establish a second P2P connection with the P2P server 304, suspend forwarding and transmitting of video data to the first client 301 via the relay server 303, and directly transmit the video data to the first client 301 with the P2P mode.

The relay server 303 is configured to receive the first and second connection requests respectively from the fist client 301 and the second client 302, establish a first relay connection with the first client 301, establish a second relay connection with the second client 302, forward and transmit the video data to the first client 301 and the second client 302.

The P2P server 304 is configured to receive the first and second connection requests respectively from the first client 301 and the second client 302, respectively establish first and second P2P connections with the first client 301 and the second client 302. When the first client 301 and the second client 302 suspend forwarding and transmitting of the video data via the relay server 303, the P2P server 304 is further configured to provide the first client 301 and the second client 302 with the P2P mode to directly transmit the video data.

Specifically speaking, the first and second clients may be game clients, webpage clients, mobile terminal clients, etc, which are not limited by the embodiments of the invention.

When the first P2P connection between the first client 301 and the P2P server 304 is established successfully, the second P2P connection between the second client 302 and the P2P server 304 is established successfully, and when transmission of the first frame of data between the first client 301 and the second client 302 is completed, the first client 301 and the second client 302 suspend forwarding and transmitting of the video data via the relay server 303.

Correspondingly, when the second P2P connection between the second client 302 and the P2P server 304 is established successfully, the first P2P connection between the first client 301 and the P2P server 304 is established successfully, and when transmission of the first frame of data with the P2P mode between the second client 302 and the first client 301 is completed, the second client 302 and the first client 301 suspend forwarding and transmitting of the video data via the relay server 303.

During the transmission of video data between the first client 301 and the second client 302 with the P2P mode, when the connection between the first client 301 and the second client 302 breaks, or packet loss of video data transmitted between the first client 301 and the second client 302 is larger than a predetermined coefficient, still or, buffer time of video data transmitted between the first client 301 and the second client 302 is larger than a predetermined time, the first client 301 determines to maintain the first relay connection to the relay server 303, the second client 302 determines to maintain the second relay connection to the relay server 303, the relay server 303 is further configured to continuously forward and transmit the video data for the first client 301 and the second client 302.

Predetermined coefficient of packet loss and predetermined time of buffer time may be flexibly selected according to actual conditions. For example, the predetermined coefficient of packet loss may be set as 10%, the predetermined time of buffer time may be set as 10 seconds, which are not limited by the embodiments of the invention.

When the first relay connection between the first client 301 and the relay server 303 breaks, the relay server 303 is configured to receive the first connection request from the first client 301. When the first relay connection to the first client 301 is established successfully, the relay server 303 is configured to continuously forward and transmit the video data for the first client 301 and the second client 302.

When the second relay connection between the second client 302 and the relay server 303 breaks, the relay server 303 is configured to receive the second connection request from the second client 302. When the second relay connection to the second client 302 is established successfully, the relay server 303 is configured to continuously forward and transmit the video data for the first client 301 and the second client 302.

When the first client 301 and the second client 302 respectively break the connection to the relay server 303, the relay server 303 is configured to receive the first and second connection requests respectively from the first client 301 and the second client 302. When the first relay connection to the first client 301 is established successfully, the second relay connection to the second client 302 is established successfully, the relay server 303 is configured to continuously forward and transmit the video data for the first client 301 and the second client 302.

When the first relay connection between the first client 301 and the relay server 303 is established successfully, the second relay connection between the second client 302 and the relay server 303 has not been established successfully, at this time, the first P2P connection between the first client 301 and the P2P server 304 has been established successfully, the second P2P connection between the second client 302 and the P2P server 304 has been established successfully, the P2P server 304 is configured to directly transmit the video data for the first client 301 and the second client 302 with the P2P mode, break the connection between the first client 301 and the relay server 303, and break the connection between the second client 302 and the relay server 303.

The relay server 303 is further configured to authenticate the first and second users, respectively based on the ID authentication information of the first user in the first connection request and the ID authentication information of the second user in the second connection request. When the authentications for the first and second users are successful, the relay server 303 is configured to establish the first and second relay connections respectively with the first client 301 and the second client 302.

The P2P server 304 is further configured to authenticate the first and second users, respectively based on the ID authentication information of the first user in the first connection request, and the ID authentication information of the second user in the second connection request. When the authentications for the first and second users are successful, the P2P server 304 establishes the first and second P2P connections respectively with the first client 301 and the second client 302.

With the system provided by the embodiment of the invention, at the initial stage of transmission of the video data, a relay server is adopted to transmit the video data. When the P2P connection is established successfully, a P2P mode is adopted to directly transmit the video data. Thus, problems, such as low speed of log-on and connection, even without connection, generated when a client adopting the P2P mode, may be solved, to enable a user to transmit video quickly. Thus, a user's usage experience may be improved, and network bandwidth may be saved. When the P2P cannot be used because of something wrong, it may switch to the relay server in time. The video data may be transmitted via the relay server, to enable a user to continuously transmit the video data. Thus, continuity of video data transmitted by the user may be ensured.

### The fourth embodiment

An embodiment of the invention also provides a device for transmitting video data, which is located in a first client. With reference to FIG.4, the device includes the follows.

A sending module 401, configured to respectively send a first connection request to a relay server and a P2P server.

Specifically speaking, the first client and other clients may be game client, webpage client, mobile terminal client, and so on, which are not limited by embodiments of the invention.

A relay transmitting module 402, configured to establish a first relay connection with the relay server, after the first client sending the first connection request to the relay server via the sending module 401. When the first relay connection is established successfully, the first client and other clients may forward and transmit the video data via the relay server.

A relay suspending module 403, configured to establish a first P2P connection with the P2P server, according to the first connection request sent by the sending module 401 to the P2P server, after the video data is forwarded and transmitted between the relay transmitting module 402 of the first client and other clients via the relay server. When the first P2P connection is established successfully, the first client breaks the connection to the relay server.

After the first P2P connection between the first client and the P2P server is established successfully, a P2P transmitting module 404 is further configured to directly transmit the video data between the first client and other clients with the P2P mode.

Furthermore, the relay suspending module 403 further includes a relay suspending unit, configured to suspend the forwarding and transmitting of video data to other clients via the relay server, after the first P2P connection between the first client and the P2P server is established successfully, and transmission of the first frame of data with the P2P mode between the first client and other clients is completed.

The device still includes a relay maintaining module, configured to determine whether to maintain the first relay connection between the first client and the relay server, during the process of transmission of video data between the first client and another client with the P2P mode, when the connection between the first client and another client breaks, or packet loss of video data transmitted between the first client and another client is larger than a predetermined coefficient, still or, buffer time of video data transmitted between the first client and another client is larger than a predetermined time. If yes, the relay maintaining module is configured to continuously forward and transmit the video data for the first client and another client via the relay server.

The predetermined coefficient of packet loss and the predetermined time of buffer time may be flexibly set according to actual conditions. For example, the predetermined coefficient of packet loss may be set as 10%, the predetermined time of buffer time may be set as 10 seconds, which are not limited by embodiments of the invention.

Otherwise, the first client sends the first connection request to the relay server. When the first relay connection between the first client and the relay server is established successfully, the video data is continuously forwarded and transmitted for the first client and another client via the relay server.

With the device provided by the embodiment of the invention, at the initial stage of transmission of the video data, a relay server is adopted to transmit the video data. When the P2P connection is established successfully, the P2P mode is adopted to directly transmit the video data. Thus, problems, such as low speed of log-on and connection, even without connection, generated when a client adopts the P2P mode, may be solved, to enable a user to transmit the video quickly. Thus, a user's usage experience may be improved, and network bandwidth may be saved. When the P2P cannot be used because of something wrong, it may switch to the relay server in time, to transmit the video data via the relay server, to enable a user to continuously transmit the video data. Thus, the continuity of transmission of the video data may be ensured.

The word "receiving" in the embodiment of the invention may be understood as actively obtaining information from another module, or receiving information sent by another module.

Persons having ordinary skill in the art may easily learn that the attached figure is only schematic diagram of a preferred embodiment. The module or flow illustrated in the attached figure is not definitely necessary to implement the invention.

Persons having ordinary skill in the art may understand that the modules in the device embodiment may be distributed in the device of the embodiment according to embodiment descriptions, or may change correspondingly to locate in one or more devices different from the embodiment. The modules in above embodiment may be combined into one module, or may be divided into multiple sub-modules furthermore.

Sequence number in above embodiments of the invention is only used for descriptions, which doesn't demonstrate good or better embodiment.

Some blocks in the embodiments of the invention may be implemented with software. Corresponding software programs may be stored in readable storage medium, such as Optical Disk (CD), hard disk.

## Claims

1. A method for transmitting video data, comprising:
sending (101, 202), by a first game client, a first log-on and connection establish request respectively to a relay server and a Peer to Peer, P2P, server, wherein the relay server and the P2P server are provided by a video network game system;
sending (101, 202), by a second game client, a second log-on and connection establish request respectively to the relay server and the P2P server;
forwarding and transmitting the video data (102), by the first game client and the second game client via the relay server, when a first relay connection between the first game client and the relay server is established successfully and a second relay connection between the second game client and the relay server is established successfully;
suspending (103), by the first game client and the second game client, the forwarding and transmitting of the video data via the relay server, when a first P2P connection between the first game client and the P2P sever is established successfully and a second P2P connection between the second game client and the P2P server is established successfully, after transmission of a first frame of data between the first game client and the second game client is completed with a P2P mode;
transmitting (104, 204), by the first game client and the second game client, directly the video data with the P2P mode;
**characterized by**,
during the process of transmitting the video data by the first game client and the second game client with the P2P mode, when packet loss of the video data transmitted between the first game client and the second game client is larger than a predetermined coefficient, continuously transmitting, by the first game client and the second game client, the video data via the relay server (208); and sending, by the first game client, the first log-on and connection establish request to the P2P server; sending, by the second game client, the second log-on and connection establish request to the P2P server;
when the P2P server restores, respectively receiving, by the first game client and the second game client, a P2P connection success response sent by the P2P server, suspending transmitting of the video data via the relay server, and transmitting the video data with the P2P mode (206, 207).

2. The method of claim 1, further comprising:
when the first relay connection between the first game client and the relay server breaks, the second relay connection between the second game client and the relay server is established successfully, sending, by the first game client, the first log-on and connection establish request to the relay server; when the first relay connection between the first game client and the relay server is established successfully, forwarding and transmitting, by the first game client and the second game client, the video data via the relay server;
when the second relay connection between the second game client and the relay server breaks, the first relay connection between the first game client and the relay server is established successfully, sending, by the second game client, the second log-on and connection establish request to the relay server; when the second relay connection between the second game client and the relay server is established successfully, forwarding and transmitting, by the first game client and the second game client, the video data via the relay server;
when the first relay connection between the first game client and the relay server breaks, the second relay connection between the second game client and the relay server breaks, sending, by the first game client, the first log-on and connection establish request to the relay server; sending, by the second game client, the second log-on and connection establish request, to the relay server;
when the first relay connection between the first game client and the relay server is established successfully, the second relay connection between the second game client and the relay server is established successfully, forwarding and transmitting, by the first game client and the second game client, the video data via the relay server.

3. A system for transmitting video data, wherein the system comprises a first game client (301), a second game client (302), a relay server (303) and a Peer to Peer, P2P, server (304), the relay server (303) and the P2P server (304) are provided by a video network game system, wherein
the first game client (301) is configured to send a first log-on and connection establish request to the relay server (303) and the P2P server (304), establish a first relay connection with the relay server (303), forward and transmit the video data to the second game client (302) via the relay server (303), establish a first P2P connection with the P2P server (304), suspend forwarding and transmitting of the video data to the second game client (302) via the relay server (303), and transmit directly the video data to the second game client (302) with a P2P mode;
the second game client (302) is configured to send a second log-on and connection establish request to the relay server (303) and the P2P server (304), establish a second relay connection with the relay server (303), forward and transmit the video data to the first game client (301) via the relay server (303), establish a second P2P connection with the P2P server (304), suspend the forwarding and transmitting of the video data to the first game client (301) via the relay server (303), and transmit directly the video data to the first game client (301) with the P2P mode;
the relay server (303) is configured to receive the first and second log-on and connection establish requests respectively from the first game client (301) and the second game client (302), establish the first and second relay connections respectively with the first game client (301) and the second game client (302), forward and transmit the video data for the first game client (301) and the second game client (302);
the P2P server (304) is configured to receive the first and second log-on and connection establish requests respectively from the first game client (301) and the second game client (302), establish the first and second P2P connections respectively with the first game client (301) and the second game client (302); when the first game client (301) and the second game client (302) suspend the forwarding and transmitting of the video data via the relay server (303), the P2P server (304) is further configured to provide the P2P mode for the first game client (301) and the second game client (302) to transmit directly the video data;
**characterized in that**,
during a process of transmitting the video data by the first game client (301) and the second game client (302) with the P2P mode, when packet loss of the video data transmitted between the first game client (301) and the second game client (302) is larger than a predetermined coefficient, the first game client (301) and the second game client (302) are further configured to continuously transmit the video data via the relay server (303), the P2P server (304) is further configured to receive the first and second log-on and connection establish requests respectively from the first game client (301) and the second game client (302);
when the P2P server (304) restores, the P2P server (304) is configured to respectively send a P2P connection success response to the first game client (301) and the second game client (302), so that the first game client (301) and the second game client (302) suspend transmitting of the video data via the relay server (303), and transmit the video data with the P2P mode.

4. The system of claim 3, wherein when the first relay connection between the first game client (301) and the relay server (303) breaks, the second relay connection between the second game client (302) and the relay server (303) is established successfully, the relay server (303) is further configured to receive the first log-on and connection establish request from the first game client (301); when the first relay connection between the first game client (301) and the relay server (303) is established successfully, the relay server (303) is further configured to continuously forward and transmit the video data for the first game client (301) and the second game client (302);
when the second relay connection between the second game client (302) and the relay server (303) breaks, the first relay connection between the first game client (301) and the relay server (303) is established successfully, the relay server (303) is further configured to receive the second log-on and connection establish request from the second game client (302); when the second relay connection between the relay server (303) and the second game client (302) is established successfully, the relay server (303) is further configured to continuously forward and transmit the video data for the first game client (301) and the second game client (302);
when the first relay connection between the first game client (301) and the relay server (303) breaks, the second relay connection between the second game client (302) and the relay server (303) breaks, the relay server (303) is further configured to receive the first and second log-on and connection establish requests respectively from the first game client (301) and the second game client (302); when the fist relay connection between the first game client (301) and the relay server (303) is established successfully, the second relay connection between the second game client (302) and the relay server (303) is established successfully, the relay server (303) is further configured to continuously forward and transmit the video data for the first game client (301) and the second game client (302).

5. The system of claim 3, wherein the relay server (303) is further configured to authenticate a first user and a second user, respectively based on ID authentication information of the first user in the first log-on and connection establish request, and ID authentication information of the second user in the second log-on and connection establish request, when authentications for the first and second users are successful, the relay server (303) is further configured to establish the first and second relay connections respectively with the first game client (301) and the second game client (302).

6. A device for transmitting video data, wherein the device is set in a first game client (301), the device comprises:
a sending module (401), configured to send a first log-on and connection establish request respectively to a relay server (303) and a Peer to Peer, P2P, server (304), wherein the relay server (303) and the P2P server (304) are provided by a video network game system;
a relay transmitting module (402), configured to forward and transmit the video data with a second game client (302) via the relay server (303), when the first relay connection between the first game client (301) and the relay server (303) is established successfully, and a second relay connection between the second game client (302) and the relay server (303) is established successfully;
a relay suspending module (403), configured to suspend the forwarding and transmitting of the video data via the relay server (303), when a first P2P connection between the first game client (301) and the P2P sever (304) is established successfully and a second P2P connection between the second game client (302) and the P2P server (304) is established successfully, after transmission of a first frame of data between the first game client (301) and the second game client (302) is completed with a P2P mode;
a P2P transmitting module (404), configured to transmit directly the video data with the P2P mode;
**characterized in that**,
during the process of transmitting the video data by the first game client (301) and the second game client (302) with the P2P mode, when packet loss of the video data transmitted between the first game client (301) and the second game client (302) is larger than a predetermined coefficient, the relay transmitting module (402) is further configured to continuously transmit the video data via the relay server (303); and the sending module (401) is further configured to send the first log-on and connection establish request to the P2P server (304);
the relay suspending module (403) is further configured to, after the P2P server (304) restores, and the device receives a P2P connection success response sent by the P2P server (304), suspend transmitting of the video data via the relay server (303), and the P2P transmitting module (404) is further configured to transmit the video data with the P2P mode.

## Patentansprüche

1. Verfahren zum Übertragen von Videodaten, aufweisend die folgenden Schritte:
Senden (101, 202) einer ersten Anmelde- und Verbindungsaufbauaufforderung durch einen ersten Game-Client an einen Relay-Server bzw. einen Peer-to-Peer-, P2P-, Server, wobei der Relay-Server und der P2P-Server von einem Video-Netzwerk-SpielSystem bereitgestellt werden;
Senden (101, 202) einer zweiten Anmelde- und Verbindungsaufbauaufforderung jeweils an den Relay-Server und an den P2P-Server durch einen zweiten Game-Client;
Weiterleiten und Übertragen der Videodaten (102) durch den ersten Game-Client und den zweiten Game-Client über den Relay-Server, wenn eine erste Relay-Verbindung zwischen dem ersten Game-Client und dem Relay-Server erfolgreich aufgebaut ist und eine zweite Relay-Verbindung zwischen dem zweiten Game-Client und dem Relay-Server erfolgreich aufgebaut ist;
Unterbrechen (103) des Weiterleitens und Übertragens der Videodaten über den Relay-Server durch den ersten Game-Client und den zweiten Game-Client, wenn eine erste P2P-Verbindung zwischen dem ersten Game-Client und dem P2P-Server erfolgreich aufgebaut ist und eine zweite P2P-Verbindung zwischen dem zweiten Game-Client und dem P2P-Server erfolgreich aufgebaut ist, nachdem die Übertragung eines ersten Datenrahmens zwischen dem ersten Game-Client und dem zweiten Game-Client in einem P2P-Modus abgeschlossen ist;
direktes Übertragen (104, 204) der Videodaten durch den ersten Game-Client und den zweiten Game-Client im P2P-Modus;
**gekennzeichnet durch**,
kontinuierliches Übertragen der Videodaten durch den ersten Game-Client und den zweiten Game-Client über den Relay-Server (208) während eines Prozesses des Übertragens der Videodaten durch den ersten Game-Client und den zweiten Game-Client im P2P-Modus, wenn der Paketverlust der Videodaten, die zwischen dem ersten Game-Client und dem zweiten Game-Client übertragen werden, größer als ein vorbestimmter Wert ist, und Senden der ersten Anmelde- und Verbindungsaufbauaufforderung durch den ersten Game-Client an den P2P-Server; Senden der zweiten Anmelde- und Verbindungsaufbauaufforderung durch den zweiten Game-Client an den P2P-Server;
im Falle einer Wiederherstellung des P2P-Servers, jeweiliges Empfangen einer vom P2P-Server gesendeten Antwort hinsichtlich einer erfolgreichen P2P-Verbindung durch den ersten Game-Client und den zweiten Game-Client, Aussetzen des Übertragens der Videodaten über den Relay-Server und Übertragen der Videodaten im P2P-Modus (206, 207).

2. Verfahren nach Anspruch 1, ferner aufweisend die Schritte:
Senden der ersten Anmelde- und Verbindungsaufbauaufforderung durch den ersten Game-Client an den Relay-Server, wenn die erste Relay-Verbindung zwischen dem ersten Game-Client und dem Relay-Server unterbrochen wird, und, wenn die zweite Relay-Verbindung zwischen dem zweiten Game-Client und dem Relay-Server erfolgreich aufgebaut ist:
Weiterleiten und Übertragen der Videodaten durch den ersten Game-Client und den zweiten Game-Client über den Relay-Server, wenn die erste Relay-Verbindung zwischen dem ersten Game-Client und dem Relay-Server erfolgreich aufgebaut ist;
Senden der zweiten Anmelde- und Verbindungsaufbauaufforderung durch den zweiten Game-Client an den Relay-Server, wenn die zweite Relay-Verbindung zwischen dem zweiten Game-Client und dem Relay-Server unterbrochen wird und die erste Relay-Verbindung zwischen dem ersten Game-Client und dem Relay-Server erfolgreich aufgebaut ist;
Weiterleiten und Übertragen der Videodaten durch den ersten Game-Client und den zweiten Game-Client über den Relay-Server wenn die zweite Relay-Verbindung zwischen dem zweiten Game-Client und dem Relay-Server erfolgreich aufgebaut ist;
Senden der ersten Anmelde- und Verbindungsaufbauaufforderung durch den ersten Game-Client an den Relay-Server wenn die erste Relay-Verbindung zwischen dem ersten Game-Client und dem Relay-Server unterbrochen wird und die zweite Relay-Verbindung zwischen dem zweiten Game-Client und dem Relay-Server unterbrochen wird;
Senden der zweiten Anmelde- und Verbindungsaufbauaufforderung durch den zweiten Game-Client an den Relay-Server;
Weiterleiten und Übertragen der Videodaten durch den ersten Game-Client und den zweiten Game-Client über den Relay-Server wenn die erste Relay-Verbindung zwischen dem ersten Game-Client und dem Relay-Server erfolgreich aufgebaut ist und die zweite Relay-Verbindung zwischen dem zweiten Game-Client und dem Relay-Server erfolgreich aufgebaut ist.

3. System zum Übertragen von Videodaten, wobei das System einen ersten Game-Client (301), einen zweiten Game-Client (302), einen Relay-Server (303) und einen Peer-to-Peer-, P2P-, Server (304) umfasst, wobei der Relay-Server (303) und der P2P-Server (304) von einem Video-Netzwerk-Spielsystem bereitgestellt werden, wobei
der erste Game-Client (301) so ausgebildet ist, dass er eine erste Anmelde- und Verbindungsaufbauaufforderung an den Relay-Server (303) und den P2P-Server (304) sendet, eine erste Relay-Verbindung mit dem Relay-Server (303) aufbaut, die Videodaten an den zweiten Game-Client (302) über den Relay-Server (303) weiterleitet und überträgt, eine erste P2P-Verbindung mit dem P2P-Server (304) aufbaut, die Weiterleitung und Übertragung der Videodaten an den zweiten Game-Client (302) über den Relay-Server (303) unterbricht und die Videodaten an den zweiten Game-Client (302) im P2P-Modus direkt überträgt;
der zweite Game-Client (302) so ausgebildet ist, dass er eine zweite Anmelde- und Verbindungsaufbauaufforderung an den Relay-Server (303) und den P2P-Server (304) sendet, eine zweite Relay-Verbindung mit dem Relay-Server (303) aufbaut, die Videodaten an den ersten Game-Client (301) über den Relay-Server (303) weiterleitet und überträgt, eine zweite P2P-Verbindung mit dem P2P-Server (304) aufbaut, das Weiterleiten und Übertragen der Videodaten an den ersten Game-Client (301) über den Relay-Server (303) unterbricht und die Videodaten an den ersten Game-Client (301) im P2P-Modus direkt überträgt;
der Relay-Server (303) so ausgebildet ist, dass er die erste und zweite Anmelde- bzw. Verbindungsaufbauaufforderung jeweils von dem ersten Game-Client (301) und dem zweiten Game-Client (302) empfängt, die erste und zweite Relay-Verbindung jeweils mit dem ersten Game-Client (301) und dem zweiten Game-Client (302) aufbaut, die Videodaten für den ersten Game-Client (301) und den zweiten Game-Client (302) weiterleitet und überträgt;
der P2P-Server (304) so ausgebildet ist, dass er die erste und zweite Anmelde- bzw. Verbindungsaufbauaufforderung jeweils von dem ersten Game-Client (301) und dem zweiten Game-Client (302) empfängt und die erste bzw. zweite P2P-Verbindung jeweils mit dem ersten Game-Client (301) und dem zweiten Game-Client (302) aufbaut, wenn der erste Game-Client (301) und der zweite Game-Client (302) das Weiterleiten und Übertragen der Videodaten über den Relay-Server (303) aussetzen, wobei der P2P-Server (304) ferner so ausgebildet ist, dass er den P2P-Modus für den ersten Game-Client (301) und den zweiten Game-Client (302) bereitstellt, um die Videodaten direkt zu übertragen;
**dadurch gekennzeichnet, dass**
während eines Prozesses des Übertragens der Videodaten durch den ersten Game-Client (301) und den zweiten Game-Client (302) im P2P-Modus, wenn der Paketverlust der Videodaten, die zwischen dem ersten Game-Client (301) und dem zweiten Game-Client (302) übertragen werden, größer als ein vorbestimmter Wert ist, und erster Game-Client (301) und zweiter Game-Client (302) die Videodaten kontinuierlich über den Relay-Server (303) übertragen, der P2P-Server (304) ferner so ausgebildet ist, dass er die erste und zweite Anmelde- bzw. Verbindungsaufbauaufforderung jeweils von dem ersten Game-Client (301) und dem zweiten Game-Client (302) empfängt;
der P2P-Server (304) im Falle, dass der P2P-Server (304) wiederhergestellt wird, so ausgebildet ist, dass er jeweils eine P2P-Verbindungserfolgsantwort an den ersten Game-Client (301) und den zweiten Game-Client (302) sendet, so dass der erste Game-Client (301) und der zweite Game-Client (302) das Übertragen der Videodaten über den Relay-Server (303) unterbricht und die Videodaten im P2P-Modus überträgt.

4. System nach Anspruch 3, wobei, wenn die erste Relay-Verbindung zwischen dem ersten Game-Client (301) und dem Relay-Server (303) unterbrochen wird, die zweite Relay-Verbindung zwischen dem zweiten Game-Client (302) und dem Relay-Server (303) erfolgreich aufgebaut wird, der Relay-Server (303) ferner so ausgebildet ist, dass er die erste Anmelde- und Verbindungsaufbauaufforderung von dem ersten Game-Client (301) empfängt bzw. wenn die erste Relay-Verbindung zwischen dem ersten Game-Client (301) und dem Relay-Server (303) erfolgreich aufgebaut ist, der Relay-Server (303) weiterhin so ausgebildet ist, dass er die Videodaten für den ersten Game-Client (301) und den zweiten Game-Client (302) kontinuierlich weiterleitet und überträgt; wobei
wenn die zweite Relay-Verbindung zwischen dem zweiten Game-Client (302) und dem Relay-Server (303) unterbrochen wird, die erste Relay-Verbindung zwischen dem ersten Game-Client (301) und dem Relay-Server (303) erfolgreich aufgebaut wird, der Relay-Server (303) weiterhin so ausgebildet ist, dass er die zweite Anmelde- und Verbindungsaufbauaufforderung von dem zweiten Game-Client (302) empfängt bzw. wenn die zweite Relay-Verbindung zwischen dem Relay-Server (303) und dem zweiten Game-Client (302) erfolgreich aufgebaut ist, der Relay-Server (303) weiterhin so ausgebildet ist, dass er die Videodaten für den ersten Game-Client (301) und den zweiten Game-Client (302) kontinuierlich weiterleitet und überträgt;
wenn die erste Relay-Verbindung zwischen dem ersten Game-Client (301) und dem Relay-Server (303) unterbrochen wird, die zweite Relay-Verbindung zwischen dem zweiten Game-Client (302) und dem Relay-Server (303) unterbrochen wird, der Relay-Server (303) weiterhin so ausgebildet ist, dass er die erste und zweite Anmelde- bzw. Verbindungsaufbauaufforderung jeweils von dem ersten Game-Client (301) und dem zweiten Game-Client (302) empfängt bzw. wenn die erste Relay-Verbindung zwischen dem ersten Game-Client (301) und dem Relay-Server (303) erfolgreich aufgebaut ist, die zweite Relay-Verbindung zwischen dem zweiten Game-Client (302) und dem Relay-Server (303) erfolgreich aufgebaut ist, der Relay-Server (303) weiterhin ausgebildet ist, die Videodaten für den ersten Game-Client (301) und den zweiten Game-Client (302) kontinuierlich weiterzuleiten und zu übertragen.

5. System nach Anspruch 3, wobei der Relay-Server (303) ferner so ausgebildet ist, dass er einen ersten Benutzer und einen zweiten Benutzer jeweils auf der Grundlage von ID-Authentifizierungsinformationen des ersten Benutzers in der ersten Anmelde- und Verbindungsaufbauaufforderung und ID-Authentifizierungsinformationen des zweiten Benutzers in der zweiten Anmelde- und Verbindungsaufbauaufforderung authentifiziert, wobei der Relay-Server (303) ferner so ausgebildet ist, dass er die erste und die zweite Relay-Verbindung jeweils mit dem ersten Game-Client (301) und dem zweiten Game-Client (302) aufbaut, wenn die Authentifizierungen für den ersten und den zweiten Benutzer erfolgreich sind.

6. Vorrichtung zum Übertragen von Videodaten, wobei die Vorrichtung in einem ersten Game-Client (301) eingebettet ist, wobei die Vorrichtung aufweist:
ein Sendemodul (401) das so ausgebildet ist, dass es eine erste Anmelde- bzw. Verbindungsaufbauaufforderung an einen Relay-Server (303) und einen Peer-to-Peer-, P2P-, Server (304) sendet, wobei der Relay-Server (303) und der P2P-Server (304) von einem Video-Netzwerk-Spielsystem bereitgestellt werden;
ein Relay-Übertragungsmodul (402) das so ausgebildet ist, dass es die Videodaten mit einem zweiten Game-Client (302) über den Relay-Server (303) weiterleitet und überträgt, wenn die erste Relay-Verbindung zwischen dem ersten Game-Client (301) und dem Relay-Server (303) erfolgreich aufgebaut ist, und eine zweite Relay-Verbindung zwischen dem zweiten Game-Client (302) und dem Relay-Server (303) erfolgreich aufgebaut ist;
ein Relay-Unterbrechungsmodul (403), das so ausgebildet ist, dass es das Weiterleiten und Übertragen der Videodaten über den Relay-Server (303) aussetzt, wenn eine erste P2P-Verbindung zwischen dem ersten Game-Client (301) und dem P2P-Server (304) und eine zweite P2P-Verbindung zwischen dem zweiten Game-Client (302) und dem P2P-Server (304) erfolgreich aufgebaut ist, nachdem die Übertragung eines ersten Datenrahmens zwischen dem ersten Game-Client (301) und dem zweiten Game-Client (302) in einem P2P-Modus abgeschlossen ist;
ein P2P-Übertragungsmodul (404), das so ausgebildet ist, dass es die Videodaten im P2P-Modus direkt überträgt;
**dadurch gekennzeichnet, dass**,
während eines Prozesses des Übertragens der Videodaten durch den ersten Game-Client (301) und den zweiten Game-Client (302) im P2P-Modus, wenn der Paketverlust der Videodaten, die zwischen dem ersten Game-Client (301) und dem zweiten Game-Client (302) übertragen werden, größer als ein vorbestimmter Wert ist, das Relay-Übertragungsmodul (402) weiterhin so ausgebildet ist, dass es die Videodaten kontinuierlich über den Relay-Server (303) überträgt; und das Sendemodul (401) weiterhin so ausgebildet ist, dass es die erste Anmelde- und Verbindungsaufbauaufforderung an den P2P-Server (304) sendet;
das Relay-Unterbrechungsmodul (403) ferner so ausgebildet ist, dass es, nachdem der P2P-Server (304) wiederhergestellt ist und die Vorrichtung eine vom P2P-Server (304) gesendete P2P-Verbindungserfolgsantwort empfängt, das Senden der Videodaten über den Relay-Server (303) aussetzt, und das P2P-Sendemodul (404) ferner so ausgebildet ist, dass es die Videodaten im P2P-Modus sendet.

## Revendications

1. Procédé pour transmettre des données vidéo, comprenant les étapes suivantes :
envoyer (101, 202), par un premier client de jeu, une première demande d'ouverture de session et d'établissement de connexion, respectivement, à un serveur relais et à un serveur Peer to Peer, P2P, où le serveur relais et le serveur P2P sont fournis par un système de jeu vidéo en réseau ;
envoyer (101, 202), par un second client de jeu, une seconde demande d'ouverture de session et d'établissement de connexion, respectivement, au serveur relais et au serveur P2P ;
faire suivre et transmettre des données vidéo (102), par le premier client de jeu et le second client de jeu par l'intermédiaire du serveur relais, lorsqu'une première connexion de relais entre le premier client de jeu et le serveur relais est établie avec succès et qu'une seconde connexion de relais entre le second client de jeu et le serveur relais est établie avec succès ;
suspendre (103), par le premier client de jeu et le second client de jeu, la retransmission et le transfert des données vidéo par l'intermédiaire du serveur relais, lorsqu'une première connexion P2P entre le premier client de jeu et le serveur P2P est établie avec succès et qu'une seconde connexion P2P entre le second client de jeu et le serveur P2P est établie avec succès, après que la transmission d'une première trame de données entre le premier client de jeu et le second client de jeu s'est terminée avec un mode P2P ;
transmettre (104, 204), par le premier client de jeu et le second client de jeu, directement, les données vidéo avec le mode P2P ;
**caractérisé par** les étapes suivantes :
pendant le processus de transmission des données vidéo par le premier client de jeu et le second client de jeu en mode P2P, lorsque la perte de paquets de données vidéo transmises entre le premier client de jeu et le second client de jeu est supérieure à un coefficient prédéterminé, transmettre en continu, par le premier client de jeu et le second client de jeu, les données vidéo par l'intermédiaire du serveur relais (208) ; et
envoyer, par le premier client de jeu, la première demande d'ouverture de session et d'établissement de connexion au serveur P2P ; envoyer, par le second client de jeu, la seconde demande d'ouverture de session et d'établissement de connexion au serveur P2P ;
lorsque le serveur P2P rétablit respectivement la réception, par le premier client de jeu et le second client de jeu, d'une réponse de réussite de connexion P2P envoyée par le serveur P2P, suspendre la transmission des données vidéo par l'intermédiaire du serveur relais, et transmettre des données vidéo avec le mode P2P (206, 207) .

2. Procédé selon la revendication 1, comprenant en outre les étapes suivantes :
lorsque la première connexion de relais entre le premier client de jeu et le serveur relais se rompt, et que la seconde connexion de relais entre le second client de jeu et le serveur relais est établie avec succès, envoyer, par le premier client de jeu, de la première demande d'ouverture de session et d'établissement de connexion au serveur relais ; lorsque la première connexion de relais entre le premier client de jeu et le serveur relais est établie avec succès, faire suivre et transmettre, par le premier client de jeu et le second client de jeu, les données vidéo par l'intermédiaire du serveur relais ;
lorsque la seconde connexion de relais entre le second client de jeu et le serveur relais est interrompue, et que la première connexion de relais entre le premier client de jeu et le serveur relais est établie avec succès, envoyer, par le second client de jeu, la seconde demande d'ouverture de session et d'établissement de connexion au serveur relais ; lorsque la seconde connexion de relais entre le second client de jeu et le serveur relais est établie avec succès, faire suivre et transmettre, par le premier client de jeu et le second client de jeu, les données vidéo par l'intermédiaire du serveur relais ;
lorsque la première connexion de relais entre le premier client de jeu et le serveur relais est interrompue, et que la seconde connexion de relais entre le second client de jeu et le serveur relais est interrompue, envoyer, par le premier client de jeu, la première demande d'ouverture de session et d'établissement de connexion au serveur relais ; envoyer, par le second client de jeu, la seconde demande d'ouverture de session et d'établissement de connexion au serveur relais ;
lorsque la première connexion de relais entre le premier client de jeu et le serveur relais est établie avec succès, et que la seconde connexion de relais entre le second client de jeu et le serveur relais est établie avec succès, faire suivre et transmettre, par le premier client de jeu et le second client de jeu, les données vidéo par l'intermédiaire du serveur relais.

3. Système pour transmettre des données vidéo, dans lequel le système comprend un premier client de jeu (301), un second client de jeu (302), un serveur relais (303) et un serveur Peer to Peer, P2P, (304), le serveur relais (303) et le serveur P2P (304) sont fournis par un système de jeu en réseau vidéo, où :
le premier client de jeu (301) est configuré pour envoyer une première demande d'ouverture de session et d'établissement de connexion au serveur relais (303) et au serveur P2P (304), établir une première connexion de relais avec le serveur relais (303), faire suivre et transmettre les données vidéo au second client de jeu (302) par l'intermédiaire du serveur relais (303), établir une première connexion P2P avec le serveur P2P (304), suspendre le transfert et la transmission des données vidéo au second client de jeu (302) par l'intermédiaire du serveur relais (303), et transmettre directement les données vidéo au second client de jeu (302) avec un mode P2P ;
le second client de jeu (302) est configuré pour envoyer une seconde demande d'ouverture de session et d'établissement de connexion au serveur relais (303) et au serveur P2P (304), établir une seconde connexion de relais avec le serveur relais (303), faire suivre et transmettre les données vidéo au premier client de jeu (301) par l'intermédiaire du serveur relais (303), établir une seconde connexion P2P avec le serveur P2P (304), suspendre le transfert et la transmission des données vidéo au premier client de jeu (301) par l'intermédiaire du serveur relais (303), et transmettre directement les données vidéo au premier client de jeu (301) avec le mode P2P ;
le serveur relais (303) est configuré pour recevoir les première et seconde demandes d'ouverture de session et d'établissement de connexion respectivement du premier client de jeu (301) et au second client de jeu (302), établir les première et seconde connexions de relais respectivement avec le premier client de jeu (301) et le second client de jeu (302), faire suivre et transmettre les données vidéo pour le premier client de jeu (301) et le second client de jeu (302) ;
le serveur P2P (304) est configuré pour recevoir les première et seconde demandes d'ouverture de session et d'établissement de connexion respectivement du premier client de jeu (301) et du second client de jeu (302), établir les première et seconde connexions P2P respectivement avec le premier client de jeu (301) et le second client de jeu (302) ; lorsque le premier client de jeu (301) et le second client de jeu (302) suspendent le transfert et la transmission des données vidéo par l'intermédiaire du serveur relais (303), le serveur P2P (304) est en outre configuré pour fournir le mode P2P au premier client de jeu (301) et au second client de jeu (302) pour transmettre directement les données vidéo ;
**caractérisé en ce que** :
pendant un processus de transmission des données vidéo par le premier client de jeu (301) et le second client de jeu (302) en mode P2P, lorsque la perte de paquets de données vidéo transmises entre le premier client de jeu (301) et le second client de jeu (302) est supérieure à un coefficient prédéterminé, le premier client de jeu (301) et le second client de jeu (302) sont en outre configurés pour transmettre en continu les données vidéo par l'intermédiaire du serveur relais (303), le serveur P2P (304) est en outre configuré pour recevoir les première et seconde demandes d'ouverture de session et d'établissement de connexion respectivement du premier client de jeu (301) et du second client de jeu (302) ;
lorsque le serveur P2P (304) se rétablit, le serveur P2P (304) est configuré pour envoyer respectivement une réponse de succès de connexion P2P au premier client de jeu (301) et au second client de jeu (302), de manière à ce que le premier client de jeu (301) et le second client de jeu (302) suspendent la transmission des données vidéo par l'intermédiaire du serveur relais (303) et transmettent les données vidéo avec le mode P2P.

4. Système selon la revendication 3, dans lequel, lorsque la première connexion de relais entre le premier client de jeu (301) et le serveur relais (303) se rompt, et que la seconde connexion de relais entre le second client de jeu (302) et le serveur relais (303) est établie avec succès, le serveur relais (303) est en outre configuré pour recevoir la première demande d'ouverture de session et d'établissement de connexion du premier client de jeu (301) ; lorsque la première connexion de relais entre le premier client de jeu (301) et le serveur relais (303) est établie avec succès, le serveur relais (303) est en outre configuré pour transférer et transmettre en continu les données vidéo pour le premier client de jeu (301) et le second client de jeu (302) ; lorsque la seconde connexion de relais entre le second client de jeu (302) et le serveur relais (303) se rompt, et que la première connexion de relais entre le premier client de jeu (301) et le serveur relais (303) est établie avec succès, le serveur relais (303) est en outre configuré pour recevoir la seconde demande d'ouverture de session et d'établissement de connexion du second client de jeu (302) ; lorsque la seconde connexion de relais entre le serveur relais (303) et le second client de jeu (302) est établie avec succès, le serveur relais (303) est en outre configuré pour transférer et transmettre en continu les données vidéo pour le premier client de jeu (301) et le second client de jeu (302) ; lorsque la première connexion de relais entre le premier client de jeu (301) et le serveur relais (303) se rompt, et que la seconde connexion de relais entre le second client de jeu (302) et le serveur relais (303) se rompt, le serveur relais (303) est en outre configuré pour recevoir les première et seconde demandes d'ouverture de session et d'établissement de connexion respectivement du premier client de jeu (301) et du second client de jeu (302) ; lorsque la première connexion de relais entre le premier client de jeu (301) et le serveur relais (303) est établie avec succès, et que la seconde connexion de relais entre le second client de jeu (302) et le serveur relais (303) est établie avec succès, le serveur relais (303) est en outre configuré pour transférer et transmettre en continu les données vidéo pour le premier client de jeu (301) et le second client de jeu (302).

5. Système selon la revendication 3, dans lequel le serveur relais (303) est en outre configuré pour authentifier un premier utilisateur et un second utilisateur, respectivement, sur la base des informations d'authentification d'ID du premier utilisateur dans la première demande d'ouverture de session et d'établissement de connexion, et des informations d'authentification d'ID du second utilisateur dans la seconde demande d'ouverture de session et d'établissement de connexion, lorsque les authentifications pour les premier et second utilisateurs sont réussies, le serveur relais (303) est en outre configuré pour établir les première et seconde connexions de relais respectivement avec le premier client de jeu (301) et le second client de jeu (302).

6. Dispositif pour transmettre des données vidéo, dans lequel le dispositif est placé dans un premier client de jeu (301), le dispositif comprenant :
un module d'envoi (401), configuré pour envoyer une première demande d'ouverture de session et d'établissement de connexion respectivement à un serveur relais (303) et à un serveur Peer to Peer, P2P, (304), où le serveur relais (303) et le serveur P2P (304) sont fournis par un système de jeu vidéo en réseau ;
un module de transmission de relais (402), configuré pour faire suivre et transmettre les données vidéo avec un second client de jeu (302) par l'intermédiaire du serveur relais (303), lorsque la première connexion de relais entre le premier client de jeu (301) et le serveur relais (303) est établie avec succès, et une seconde connexion de relais entre le second client de jeu (302) et le serveur relais (303) est établie avec succès ;
un module de suspension de relais (403), configuré pour suspendre le transfert et la transmission des données vidéo par l'intermédiaire du serveur relais (303), lorsqu'une première connexion P2P entre le premier client de jeu (301) et le serveur P2P (304) est établie avec succès et une seconde connexion P2P entre le second client de jeu (302) et le serveur P2P (304) est établi avec succès, après que la transmission d'une première trame de données entre le premier client de jeu (301) et le second client de jeu (302) s'est terminée avec un mode P2P ;
un module de transmission P2P (404), configuré pour transmettre directement les données vidéo avec le mode P2P ;
**caractérisé en ce que** :
pendant le processus de transmission des données vidéo par le premier client de jeu (301) et le second client de jeu (302) en mode P2P, lorsque la perte de paquets de données vidéo transmises entre le premier client de jeu (301) et le second client de jeu (302) est supérieure à un coefficient prédéterminé, le module de transmission relais (402) est en outre configuré pour transmettre en continu les données vidéo par l'intermédiaire du serveur relais (303) ; et le module d'envoi (401) est en outre configuré pour envoyer la première demande d'ouverture de session et d'établissement de connexion au serveur P2P (304) ;
le module de suspension de relais (403) est en outre configuré pour, après le rétablissement du serveur P2P (304) et la réception par le dispositif d'une réponse de réussite de connexion P2P envoyée par le serveur P2P (304), suspendre la transmission des données vidéo par l'intermédiaire du serveur relais (303), et le module de transmission P2P (404) est en outre configuré pour transmettre les données vidéo avec le mode P2P.
